# EUROPÄISCHE PATENTSCHRIFT

(11) **EP 2 438 664 B1**
(45) Veröffentlichungstag und Bekanntmachung des Hinweises auf die Patenterteilung: **19.04.2017**
(21) Anmeldenummer: 10720118.8
(22) Anmeldetag: 28.04.2010
(51) Int. Cl.: H01H 23/06, H02G 3/14, H01H 23/14

(54) **ELEKTRO-INSTALLATIONSEINHEIT**
ELECTRICAL INSTALLATION UNIT
UNITÉ D'INSTALLATION ÉLECTRIQUE

(30) Priorität: 05.06.2009 AT 8742009
(43) Veröffentlichungstag der Anmeldung: 11.04.2012
(73) Patentinhaber: Eaton Industries (Austria) GmbH, 3943 Schrems (AT)
(72) Erfinder: JESCHKO, Robert, A-3943 Schrems (AT)
(74) Vertreter: Eaton IP Group EMEA
(86) Internationale Anmeldenummer: PCT/AT2010/000131
(87) Internationale Veröffentlichungsnummer: WO 2010/138980

(56) Entgegenhaltungen:
- DE-A1- 2 629 624
- DE-U1- 29 807 106
- DE-U1- 29 809 106
- DE-U1-202004 005 837
- GB-A- 2 345 367
- US-A- 4 257 555
- US-A- 5 982 103

## Beschreibung

Die Erfindung betrifft eine Elektro-Installationseinheit gemäß dem Oberbegriff des Patentanspruches 1.

Es sind Elektro-Installationseinheiten zur Aufputzmontage bekannt, welche zur Aufnahme eines Schalters bzw. Tasters vorgesehen sind, wobei der Schalter bzw. Taster einen Funksender umfasst, und derart ein anderes Gerät fernsteuert, wobei keinerlei leitungsgebundene Nachrichten- und/oder Energieverbindung zwischen der Elektro-Installationseinheit und dem Gerät besteht. Derartige Elektro-Installationseinheiten sollen dabei hinsichtlich deren Gestaltung bzw. deren Design zu den weiteren Komponenten der Hausinstallationsanordnung passen. Es ist eine Elektro-Installationseinheit bekannt, welche eine Bodenplatte zur Wandmontage der Elektro-Installationseinheit umfasst, wobei auf der Bodenplatte ein Zwischenrahmen angeordnet ist, und zwischen dem Zwischenrahmen und der Bodenplatte ein Abdeckrahmen gehalten ist. In dem Zwischenrahmen ist das Funkmodul gehalten, an welchem wiederum die Schaltwippe befestigt ist. Nachteilig an einer derartigen Ausbildung ist die hohe Komplexität einer derartigen Lösung.

Die DE 298 07 106 U1 beschreibt einen Aufputzschalter, welcher aus einer Bodenplatte, einem Träger für elektrische Kontaktteile und einer Einfassung besteht. Die DE 26 29 624 A1 beschreibt einen Schalter zur Aufputzmontage, wobei eine Abdeckung direkt auf den unmittelbar auf die Wand geschraubten Schalter befestigt wird.

Die DE 298 09 106 U1 beschreibt eine Installationseinheit zur Aufputzmontage und zur Unterbringung eines Funkmoduls. Die DE 20 2004 005837 U1 beschreibt eine Installationseinheit zur Aufputzmontage, mit einer Bodenplatte, einem Abdeckrahmen, einer Zwischenplatte zur Fixierung des Abdeckrahmens, einem Funkmodul und einer Schaltwippe. Die GB 2 345 367 A beschreibt einen drahtlosen Aktor. Die US 4 257 555 A offenbart einen programmierbaren Thermostaten. Die US 5 982 103 A beschreibt ein Funkmodul zur Wandmontage, wobei das Modul ein Gehäuse aufweist, welches aus zahlreichen Teilen besteht.

Aufgabe der Erfindung ist es daher eine Elektro-Installationseinheit der eingangs genannten Art anzugeben, mit welcher die genannten Nachteile vermieden werden können, mit welcher die Anzahl der erforderlichen Teile reduziert, sowie der Aufbau vereinfacht werden kann. Erfindungsgemäß wird dies durch die Merkmale des Patentanspruches 1 erreicht.

Dadurch kann die Anzahl der erforderlichen Teile bei einer erfindungsgemäßen Elektro-Installationseinheit reduziert werden. Dadurch kann weiters der Aufbau Selbiger deutlich vereinfacht werden. Durch die unmittelbare Anbindung bzw. Verbindung des Moduls mit der Bodenplatte kann auf einen weiteren Bauteil bzw. Zwischenrahmen verzichtet werden, die Verbindung kann daher zwischenrahmenfrei erfolgen. Dadurch kann unter Verzicht auf einen Bauteil bzw. ein Bauelement die volle Funktionalität ermöglicht werden, wie bei bekannten Elektro-Installationseinheiten nach dem Stand der Technik, wobei insbesondere auch die passgenaue Anordnung unterschiedlicher Abdeck- bzw. Dekorrahmen an einer derartigen erfindungsgemäßen Elektro-Installationseinheit möglich ist. Dadurch kann auf einen sehr aufwändig geformten Teil verzichtet werden, welcher in der Regel als Spritzgussteil oder als Blechpräge/Biegeteil ausgeführt ist, und entsprechend hohe Herstellungskosten aufweist.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste besonders bevorzugte Ausführungsform einer erfindungsgemäßen Elektro-Installationseinheit in axonometrischer Explosionsdarstellung; und
Fig. 2 eine zweite besonders bevorzugte Ausführungsform einer erfindungsgemäßen Elektro-Installationseinheit in axonometrischer Explosionsdarstellung.

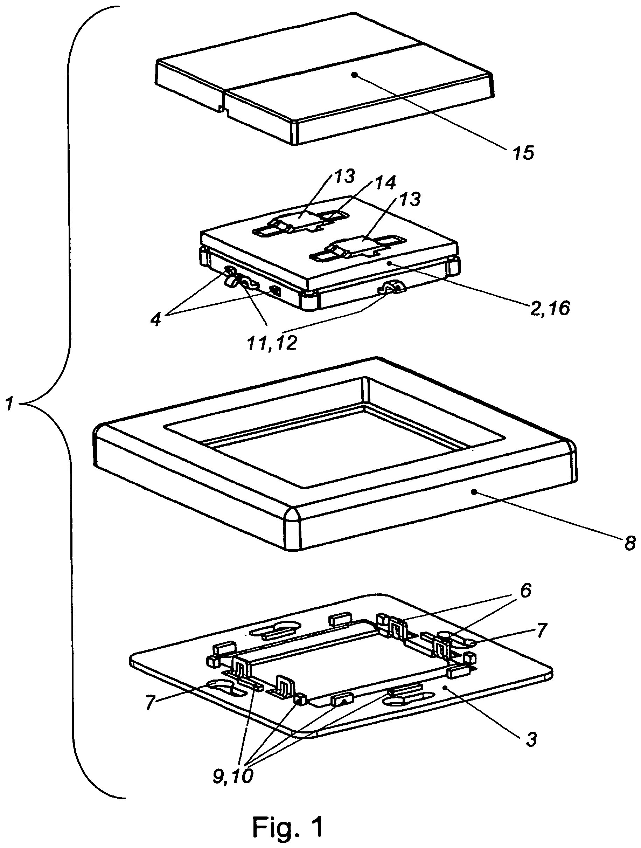

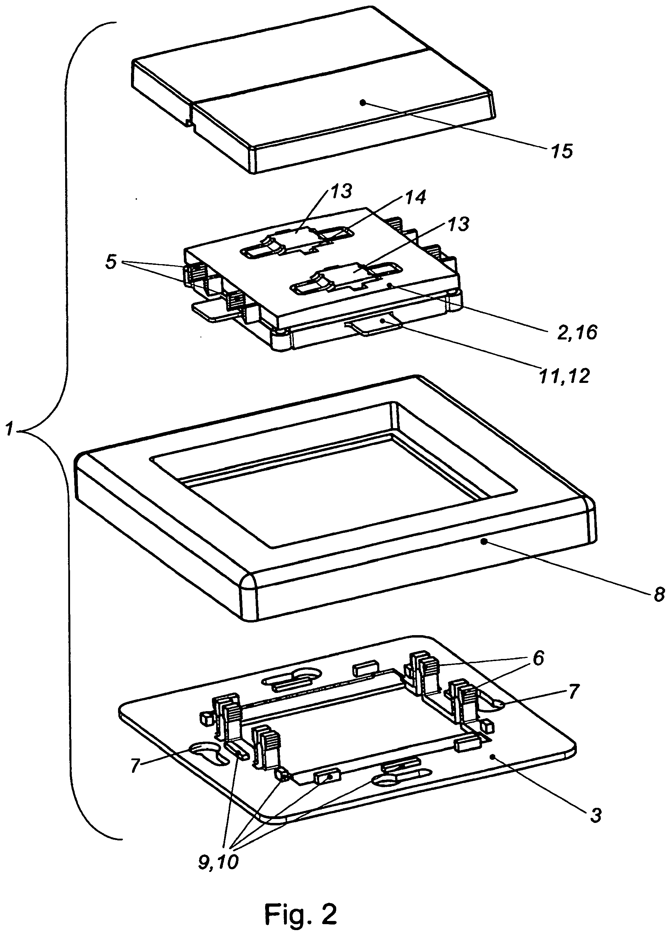

Die Fig. 1 und 2 zeigen eine Elektro-Installationseinheit 1 zur Aufputzmontage, umfassend wenigstens ein Modul 2 zur drahtlosen Datenübertragung, und weiters umfassend eine Bodenplatte 3, wobei das Modul 2 unmittelbar mit der Bodenplatte 3 verbunden ist.

Dadurch kann die Anzahl der erforderlichen Teile bei einer erfindungsgemäßen Elektro-Installationseinheit 1 reduziert werden. Dadurch kann weiters der Aufbau Selbiger deutlich vereinfacht werden. Durch die unmittelbare Anbindung bzw. Verbindung des Moduls 2 mit der Bodenplatte 3 kann auf einen weiteren Bauteil bzw. Zwischenrahmen verzichtet werden, die Verbindung kann daher zwischenrahmenfrei erfolgen. Dadurch kann unter Verzicht auf einen Bauteil bzw. ein Bauelement die volle Funktionalität ermöglicht werden, wie bei bekannten Elektro-Installationseinheiten 1 nach dem Stand der Technik, wobei insbesondere auch die passgenaue Anordnung unterschiedlicher Abdeck- bzw. Dekorrahmen 8 an einer derartigen erfindungsgemäßen Elektro-Installationseinheit 1 möglich ist. Dadurch kann auf einen sehr aufwändig geformten Teil verzichtet werden, welcher in der Regel als Spritzgussteil oder als Blechpräge/Biegeteil ausgeführt ist, und entsprechend hohe Herstellungskosten aufweist.

Bei einer erfindungsgemäßen Elektro-Installationseinheit 1 kann es sich um jede Art einer Elektro-Installationseinheit 1 handeln, welche zur sog. Aufputzmontage vorgesehen und/oder ausgebildet ist, wobei der Begriff Aufputzmontage die Anordnung bzw. Montage der vollständigen Elektro-Installationseinheit 1 auf einer im Wesentlichen flachen Oberfläche umfasst, welche nicht ausschließlich als verputztes Mauerwerk ausgeführt sein muss. Der Begriff kann auch die Anordnung auf einer Holz- und/oder Verbundwerkstoffplatte umfassen.

Wesen der sog. Aufputzmontage ist dabei der Umstand, dass unter bzw. hinter der Elektro-Installationseinheit 1 keine Durchbrechungen bzw. Hohlräume, insbesondere keine sog. Unterputzdose, in der Oberfläche erforderlich sind, auf welcher die Elektro-Installationseinheit 1 angeordnet ist.

Bei einer erfindungsgemäßen Elektro-Installationseinheit 1 handelt es sich bevorzugt um eine Elektro-Installationseinheit 1 aus dem Bereich der Hausinstallationstechnik, insbesondere um entsprechende Steuergeräte, wie etwa Schalter und/oder Taster, welcher in Räumen zur Steuerung im Wesentlichen elektrischer Verbraucher vorgesehen sind, etwa sog. Lichtschalter, -taster, -dimmer.

Eine erfindungsgemäße Elektro-Installationseinheit 1 weist wenigstens ein Modul 2 zur drahtlosen Datenübertragung auf, welches bevorzugt als Funkmodul 16 ausgebildet ist, wobei jedoch auch eine Ausbildung als Infrarotmodul oder als Modul zur Datenübertragung mittels Ultraschall, vorgesehen sein kann. Das Modul 2 weist ein Modulgehäuse auf, welches bevorzugt als Isolierstoffgehäuse ausgebildet ist. Es kann vorgesehen sein, dass das Modul 2 bzw. das Modulgehäuse mehrteilig ausgebildet ist, und bereichsweise auch Metallteile umfassen kann. Bevorzugt ist vorgesehen, dass das Modul 2 ein Betätigungselement 13, insbesondere einen Taster und/oder Schalter, aufweist, wodurch ein Benutzer Befehle an das Modul 2 eingeben kann. Gemäß den in den Figuren dargestellten bevorzugten Ausführungen ist vorgesehen, dass das Modul 2 jeweils zwei Betätigungselemente 13 aufweist. Weiters ist bevorzugt vorgesehen, dass das Modul 2 wenigstens eine Schaltwippenaufnahme 14 für eine Schaltwippe 15 aufweist, wobei diese Schaltwippenaufnahme 14 etwa als Achse im bzw. am Modulgehäuse ausgebildet ist, an welche Achse eine Schaltwippe 15 aufsteckbar ist.

Die Elektro-Installationseinheit 1 weist weiters eine Bodenplatte 3 auf, welche an der Seite, welche zum Kontakt mit einer Wand vorgesehen ist, an welcher die Elektro-Installationseinheit 1 angeordnet werden soll, im Wesentlichen plan bzw. flach ausgebildet ist. Die Befestigung der Elektro-Installationseinheit 1 an einer Wand ist bevorzugt mittels lösbarer Verbindungsmittel vorgesehen, weshalb bevorzugte Ausführungen einer Bodenplatte 3 wenigstens eine Aufnahme 7, etwas Löcher, für Verbindungsmittel zur Aufputzmontage aufweisen. Es kann vorgesehen sein, die Elektro-Installationseinheit 1 mittels Klebstoff, etwa mittels doppelseitigem Klebeband an einer Wand zu befestigen. Hiefür ist bevorzugt vorgesehen, dass die plane Seite der Bodenplatte 3 ausreichend große zusammenhängende Bereiche aufweist, um einen sicheren Kontakt zwischen Bodenplatte 3 und Klebstoff zu ermöglichen.

Erfindungsgemäß ist vorgesehen, dass das Modul 2 unmittelbar mit der Bodenplatte 3 verbunden ist, daher, dass die Verbindung zwischen dem Modul 2 und der Bodenplatte 3 frei von weiteren Bauteilen ist. Ein Teil des Moduls 2 bzw. des Modulgehäuses ist daher direkt mit einem Teil der Bodenplatte 3 verbunden bzw. liegt an diesem an.

Es können unterschiedliche Arten der Verbindung des Moduls 2 und der Bodenplatte 3 vorgesehen sein, etwa kann vorgesehen sein, das Modul 2 mit der Bodenplatte 3 zu verschrauben. Besonders bevorzugt ist jedoch vorgesehen, dass das Modul 2 mittels einer Steck- und/oder Rastverbindung unmittelbar mit der Bodenplatte 3 verbunden ist, wodurch eine besonders einfache und schnell ausführbare Verbindung zwischen dem Modul 2 und der Bodenplatte 3 erzielbar ist, und auf weitere Verbindungselemente verzichtet werden kann. Gemäß der Ausführungsform in Fig. 1 ist vorgesehen, dass das Modul 2 wenigstens eine Rastnase 4 aufweist, welche in Rastaufnahmen 6 der Bodenplatte 3 eingreifen, wobei die Rastnasen 4 bevorzugt als Vorsprünge mit dreieckigem Seitenquerschnitt ausgebildet sind. Gemäß Fig. 2 ist vorgesehen, dass das Modul 2 wenigstens eine Rastrippe 5 aufweist, welche in Rastaufnahmen 6 der Bodenplatte 3 eingreifen, wobei die Rastrippen 5 bevorzugt und wie dargestellt paarweise angeordnet sind, und an den jeweils einander zugewandten Flächen eine vorgebbare Anzahl an Rastvorsprüngen aufweisen, welche zum Eingreifen in entsprechend gegengleiche paarweise ausgebildete Rastaufnahmen 6 der Bodenplatte 3 ausgebildet ist. Diese Ausführung weist den besonderen Vorteil auf, dass die Rastrippen 5 und Rastaufnahmen 6 der Bodenplatte 3 nach Abnahme der Schaltwippen 15 von vorne dem Monteur zugänglich sind, und - durch Zusammendrücken der paarweise ausgebildeten Rastaufnahmen 6 ein Modul 2 einfach und zerstörungsfrei von der Bodenplatte 3 getrennt werden kann. Es kann auch vorgesehen sein, dass entgegen den in den Figuren dargestellten Ausbildungen vorgesehen ist, dass die Bodenplatte 3 wenigstens eine Rastnase und/oder Rastrippe aufweist, welche in Rastaufnahmen des Moduls 2 eingreifen.

Wie bereits dargelegt, ist es durch die gegenständliche Erfindung möglich an einer erfindungsgemäßen Elektro-Installationseinheit 1 unterschiedliche Abdeckrahmen 8, welche auch als Dekorrahmen bzw. Zierrahmen bezeichnet werden, anzuordnen, wobei kein weiterer Zwischenrahmen oder sonstige Bauteile erforderlich sind. Gemäß den besonders bevorzugten Ausführungen der Erfindung ist daher vorgesehen, dass zwischen der Bodenplatte 3 und dem Modul 2 wenigstens ein Abdeckrahmen 8 angeordnet ist, wodurch die Elektro-Installationseinheit 1 an das Design bzw. die Gestaltung der weiteren Hausinstallation angepasst werden kann. Dabei ist bevorzugt vorgesehen, dass der Abdeckrahmen 8 unmittelbar durch das Modul 2 an der Bodenplatte 3 gehalten ist, wodurch auf weitere Befestigungsmittel, wie etwa Schrauben oder dergleichen verzichtet werden kann. Um eine genaue Positionierung des Abdeckrahmens 8 und damit auch geringe Spalten bzw. exakte Spaltmaße zwischen Abdeckrahmen 8 und Schaltwippe 15 zu gewährleisten, ist bevorzugt vorgesehen, dass - zur Positionierung des Abdeckrahmens 8 - auf der Bodenplatte 3 Positionselemente 9 angeordnet sind, welche Positionselemente 9 vorzugsweise, und wie etwa in den Fig. 1 und 2 dargestellt, als Anschläge 10 ausgebildet sind.

Zum unmittelbaren Halten des Abdeckrahmens 8 an der Bodenplatte 3 lediglich durch das Modul 2 ist bevorzugt vorgesehen, dass der Modul 2 wenigstens einen Niederhalter 11 aufweist, um den Abdeckrahmen 8 an der Bodenplatte 3 zu halten, insbesondere um den Abdeckrahmen 8 gegen die Bodenplatte 3 zu drücken. Bevorzugt ist dabei vorgesehen, dass der wenigstens eine Niederhalter 11 als Gehäusevorsprung 12 ausgebildet ist, wie dies etwa in den Fig. 1 und 2 dargestellt ist, wobei besonders bevorzugt vorgesehen ist, dass - wie etwa in Fig. 1 dargestellt - der Gehäusevorsprung 12 als federnder Gehäusevorsprung 12 ausgebildet ist. Dadurch kann eine vorgebbare Kraft auf den Abdeckrahmen 8 ausgeübt werden, wodurch dieser besonders sicher an der Bodenplatte 3 gehalten wird.

Die Fig. 1 und 2 zeigen jeweils eine besonders bevorzugte Ausführungsform einer erfindungsgemäßen Elektro-Installationseinheit in axonometrischer Explosionsdarstellung, wobei die Darstellung der einzelnen Teile in der Reihenfolge des vorgesehenen Zusammensetzens der einzelnen Teile erfolgt. Der Abdeckrahmen 8 wird auf die an der Wand befestigte Bodenplatte 3 aufgesetzt, dann wird das Modul 2 mit der Bodenplatte 3 verbunden, wodurch auch der Abdeckrahmen 8 gehalten wird, und anschließend werden die Schaltwippen 15 auf das Modul 2 aufgesetzt.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Elektro-Installationseinheit (1) zur Aufputzmontage, umfassend wenigstens ein Modul in einem Modulgehäuse (2) zur drahtlosen Datenübertragung, und weiters umfassend eine Bodenplatte (3), wobei zwischen der Bodenplatte (3) und dem Modulgehäuse (2) wenigstens ein Abdeckrahmen (8) angeordnet ist, **dadurch gekennzeichnet, dass** das Modulgehäuse (2) unmittelbar mit der Bodenplatte (3) verbunden ist,.

2. Elektro-Installationseinheit (1) nach Anspruch 1, **dadurch gekennzeichnet, dass** die Verbindung zwischen dem Modulgehäuse (2) und der Bodenplatte (3) frei von weiteren Bauteilen ist.

3. Elektro-Installationseinheit (1) nach Anspruch 1 oder 2, dadurch gekennzeichet, dass das Modulgehäuse (2) mittels einer Steck- und/oder Rastverbindung unmittelbar mit der Bodenplatte (3) verbunden ist.

4. Elektro-Installationseinheit (1) nach einem der Ansprüche 1 bis 3, **dadurch gekennzeichnet, dass** das Modulgehäuse (2) wenigstens eine Rastnase (4) und/oder Rastrippe (5) aufweist, welche in Rastaufnahmen (6) der Bodenplatte (3) eingreifen.

5. Elektro-Installationseinheit (1) nach einem der Ansprüche 1 bis 4, **dadurch gekennzeichnet, dass** e Bodenplatte (3) wenigstens eine Rastnase und/oder Rastrippe aufweist, welche in Rastaufnahmen des Modulgehäuses (2) eingreifen.

6. Elektro-Installationseinheit (1) nach einem der Ansprüche 1 bis 5, **dadurch gekennzeichnet, dass** die Bodenplatte (3) wenigstens eine Aufnahme (7) für Verbindungsmittel zur Aufputzmontage aufweist.

7. Elektro-Installationseinheit (1) nach einem der Ansprüche 1 bis 6, **dadurch gekennzeichnet, dass** der Abdeckrahmen (8) unmittelbar durch das Modulgehäuse (2) an der Bodenplatte (3) gehalten ist.

8. Elektro-Installationseinheit (1) nach einem der Ansprüche 1 bis 7, **dadurch gekennzeichnet, dass** auf der Bodenplatte (3) Positionselemente (9), welche vorzugsweise als Anschläge (10) ausgebildet sind, angeordnet sind, zur Positionierung des Abdeckrahmens (8).

9. Elektro-Installationseinheit (1) nach einem der Ansprüche 1 bis 8, **dadurch gekennzeichnet, dass** das Modulgehäuse (2) wenigstens einen Niederhalter (11), welcher vorzugsweise als federnder Gehäusevorsprung (12) ausgebildet ist, aufweist, um den Abdeckrahmen (8) an der Bodenplatte (3) zu halten, insbesondere um den Abdeckrahmen (8) gegen die Bodenplatte (3) zu drücken.

10. Elektro-Installationseinheit (1) nach einem der Ansprüche 1 bis 9, **dadurch gekennzeichnet, dass** das Modulgehäuse (2) ein Betätigungselement (13), insbesondere einen Taster und/oder Schalter, aufweist.

11. Elektro-Installationseinheit (1) nach Anspruch 10, **dadurch gekennzeichnet, dass** das Modulgehäuse (2) wenigstens eine Schaltwippenaufnahme (14) für eine Schaltwippe (15) aufweist.

12. Elektro-Installationseinheit (1) nach einem der Ansprüche 1 bis 11, **dadurch gekennzeichnet, dass** das Modulgehäuse (2) als Funkmodul- Gehäuse (16) ausgebildet ist.

## Claims

1. Electrical installation unit (1) for surface installation, comprising at least one module in a module housing (2) for wireless data transmission, and also comprising a base plate (3), wherein at least one cover frame (8) is arranged between the base plate (3) and the module housing (2), **characterised in that** the module housing (2) is connected directly to the base plate (3).

2. Electrical installation unit (1) according to claim 1, **characterised in that** the connection between the module housing (2) and the base plate (3) is free of additional components.

3. Electrical installation unit (1) according to either claim 1 or claim 2, **characterised in that** the module housing (2) is connected directly to the base plate (3) by means of a plug and/or snap connection.

4. Electrical installation unit (1) according to any one of claims 1 to 3, **characterised in that** the module housing (2) comprises at least one latching nose (4) and/or latching rib (5) which engage in latching receivers (6) on the base plate (3).

5. Electrical installation unit (1) according to any one of claims 1 to 4, **characterised in that** the base plate (3) comprises at least one latching nose and/or latching rib which engage in latching receivers on the module housing (2).

6. Electrical installation unit (1) according to any one of claims 1 to 5, **characterised in that** the base plate (3) comprises at least one receiver (7) for connecting means for surface installation.

7. Electrical installation unit (1) according to any one of claims 1 to 6, **characterised in that** the cover frame (8) is held on the base plate (3) directly by the module housing (2).

8. Electrical installation unit (1) according to any one of claims 1 to 7, **characterised in that** on the base plate (3) positioning elements (9) are arranged, which are preferably designed as stops (10), for positioning of the cover frame (8)

9. Electrical installation unit (1) according to any one of claims 1 to 8, **characterised in that** the module housing (2) comprises at least one retainer (11), which is preferably designed as a resilient housing projection (12), in order to hold the cover frame (8) on the base plate (3), in particular, in order to push the cover frame (8) against the base plate (3).

10. Electrical installation unit (1) according to any one of claims 1 to 9, **characterised in that** the module housing (2) comprises an actuating element (13), in particular, a button and/or switch.

11. Electrical installation unit (1) according to claim 10, **characterised in that** the module housing (2) comprises at least one rocker switch receiver (14) for a rocker switch (15).

12. Electrical installation unit (1) according to any one of claims 1 to 11, **characterised in that** the module housing (2) is configured as a radio module housing (16).

## Revendications

1. Unité d'installation électrique (1) pour un montage sur crépi, comprenant au moins un module dans un boîtier de module (2) pour le transfert de données sans fil, et comprenant en outre une plaque de base (3), dans laquelle est agencé au moins un châssis de recouvrement (8) entre la plaque de base (3) et le boîtier de module (2), **caractérisée en ce que** le boîtier de module (2) est directement relié à la plaque de base (3).

2. Unité d'installation électrique (1) selon la revendication 1, **caractérisée en ce que** la liaison entre le boîtier de module (2) et la plaque de base (3) est exempte d'autres composants.

3. Unité d'installation électrique (1) selon la revendication 1 ou 2, **caractérisée en ce que** le boîtier de module (2) est directement relié à la plaque de base (3) par enfichage et/ou encliquetage.

4. Unité d'installation électrique (1) selon l'une quelconque des revendications 1 à 3, **caractérisée en ce que** le boîtier de module (2) présente au moins un taquet d'encliquetage (4) et/ou une nervure d'encliquetage (5), qui s'engage(nt) dans des logements d'encliquetage (6) de la plaque de base (3).

5. Unité d'installation électrique (1) selon l'une quelconque des revendications 1 à 4, **caractérisée en ce que** la plaque de base (3) présente au moins un taquet d'encliquetage et/ou une nervure d'encliquetage qui s'engage(nt) dans des logements d'encliquetage du boîtier de module (2).

6. Unité d'installation électrique (1) selon l'une quelconque des revendications 1 à 5, **caractérisée en ce que** la plaque de base (3) présente au moins un logement (7) pour un moyen de liaison destiné au montage sur crépi.

7. Unité d'installation électrique (1) selon l'une quelconque des revendications 1 à 6, **caractérisée en ce que** le châssis de recouvrement (8) est maintenu directement par le boîtier de module (2) sur la plaque de base (3).

8. Unité d'installation électrique (1) selon l'une quelconque des revendications 1 à 7, **caractérisée en ce que** des éléments de positionnement (9), qui sont de préférence conformés en butées (10), sont aménagés sur la plaque de base (3) pour positionner le châssis de recouvrement (8).

9. Unité d'installation électrique (1) selon l'une quelconque des revendications 1 à 8, **caractérisée en ce que** le boîtier de module (2) présente au moins un serre-flan (11), qui est conformé de préférence en saillie élastique (12) du boîtier pour maintenir le châssis de recouvrement (8) sur la plaque de base (3), en particulier pour presser le châssis de recouvrement (8) contre la plaque de base (3).

10. Unité d'installation électrique (1) selon l'une quelconque des revendications 1 à 9, **caractérisée en ce que** le boîtier de module (2) présente un élément de commande (13), en particulier un palpeur et/ou un commutateur.

11. Unité d'installation électrique (1) selon la revendication 10, **caractérisée en ce que** le boîtier de module (2) présente au moins un logement (14) pour une bascule de commutateur (15).

12. Unité d'installation électrique (1) selon l'une quelconque des revendications 1 à 11, **caractérisée en ce que** le boîtier de module (2) est conformé en boîtier de module radio (16).
